# EUROPEAN PATENT APPLICATION

(11) **EP 0 813 014 A2**
(43) Date of publication of application: **17.12.1997**
(21) Application number: 97830283.4
(22) Date of filing: 11.06.1997
(51) Int. Cl.: F16L 33/26, F16L 25/00

(54) **A flexible and extensible tubular element for coupling gas appliances to a gas delivery system**

(30) Priority: 11.06.1996 IT MI960429 U
(71) Applicant: Emiflex S.p.A., 20039 Varedo (Milano) (IT)
(72) Inventor: Lai, Giovanni, Emiflex S.p.A., 20039 Varedo (Milano) (IT)
(74) Representative: Cicogna, Franco

(57) **Abstract**

The present invention relates to a tubular element construction, which has been specifically designed for coupling gas appliances to a gas delivery system, comprising a bellows-like metal tubular element, coupled to a fitting end piece.

The main feature of the invention is that the tubular element comprises moreover a plastics material protective sheath, arranged on the outside of said metal tubular element and connected to flexible sleeve elements which can be in turn connected to the mentioned fitting end pieces.

## Description

### BACKGROUND OF THE INVENTION

The present invention relates to a flexible and extensible tubular element for coupling gas appliances to a gas delivery system.

As is known, enforcing rules related to gas delivery systems provide to use flexible tubular elements for coupling the gas appliances to the gas delivery system, said flexible tubular elements being made of bellows-like metal tubular sections, substantially made of stainless steel materials, and provided with a bellows construction so as to allow the tubular element length to be increased so as to fit a particular application.

Even if the disclosed construction is rather satisfactory from several standpoints, it, however, has the drawback that it can be damaged, under particular conditions, by atmospheric and outer agents such as, for example, fat materials and the like, which, by adhering to the surface of the tubular element may corrode it with great consequent disadvantages.

### SUMMARY OF THE INVENTION

Accordingly, the aim of the present invention is to overcome the above mentioned drawbacks by providing such a flexible and extensible tubular element preventing any possible contact with the outer surface of the metal tubular member, thereby overcoming any possible corrosion phenomena.

Within the scope of the above mentioned aim, a main object of the present invention is to provide such a flexible and extensible tubular element construction allowing to provide an outer sheath for the metal tubular element, thereby providing a further barrier preventing the inner tubular element from being damaged.

Another object of the present invention is to provide such a flexible and extensible tubular element construction which, owing to the specifically designed constructional features thereof, is very reliable and safe in operation.

Yet another object of the present invention is to provide such a flexible and extensible tubular element construction, specifically designed for connecting gas appliances to a gas delivery system, which can be easily made starting from easily commercially available elements and materials and which, moreover, is very competitive from a mere economic standpoint.

According to one aspect of the present invention, the above mentioned aim and objects, as well as yet other objects, which will become more apparent hereinafter, are achieved by a flexible and extensible tubular element construction, specifically designed for coupling gas appliances to a gas delivery system, which comprises a bellows-like metal tubular element, coupled to a fitting end-piece, characterized in that said flexible and extensible tubular element construction comprises moreover a plastics material protective sheath arranged outside of said metal tubular element and connected to flexible sleeve elements, in turn connectable to said fitting end-piece.

### BRIEF DESCRIPTION OF THE DRAWINGS

Further characteristics and advantages of the subject matter of the present invention will become more apparent hereinafter from the following detailed disclosure of a flexible and extensible tubular element construction, specifically designed for coupling gas appliances to a gas delivery system, which is illustrated, by way of an indicative, but not limitative, example in the figures of the accompanying drawings, where:

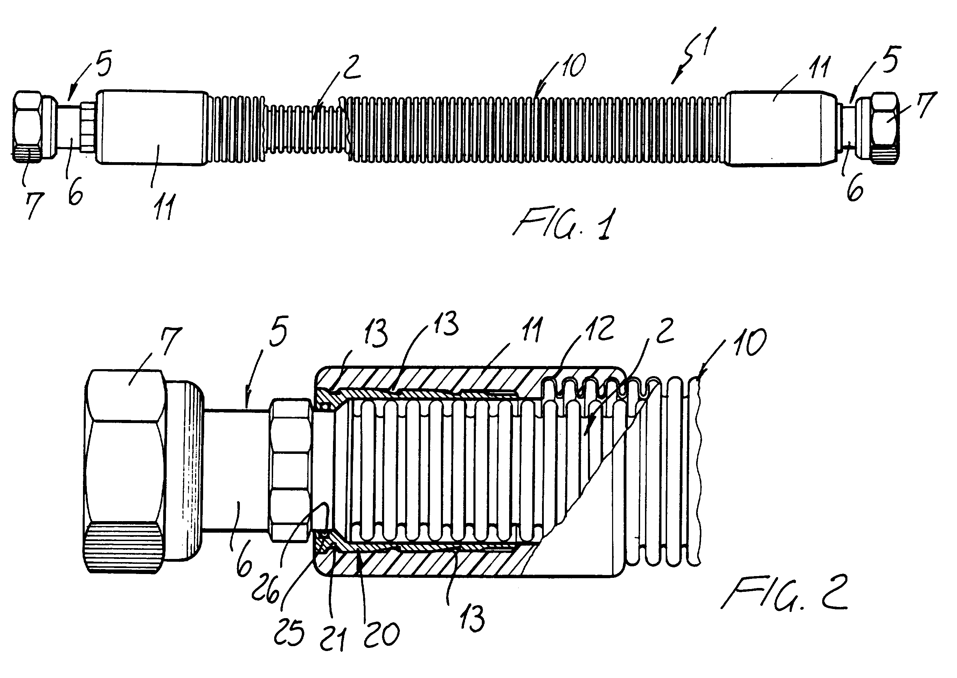

Figure 1 is a schematic partially broken-away view illustrating the flexible and extensible tubular element according to the present invention;
Figure 2 illustrates, on an enlarged scale, a detail of an end portion of the flexible and extensible tubular element, and clearly showing the fitting end piece therefor, as well as a related flexible sleeve element;

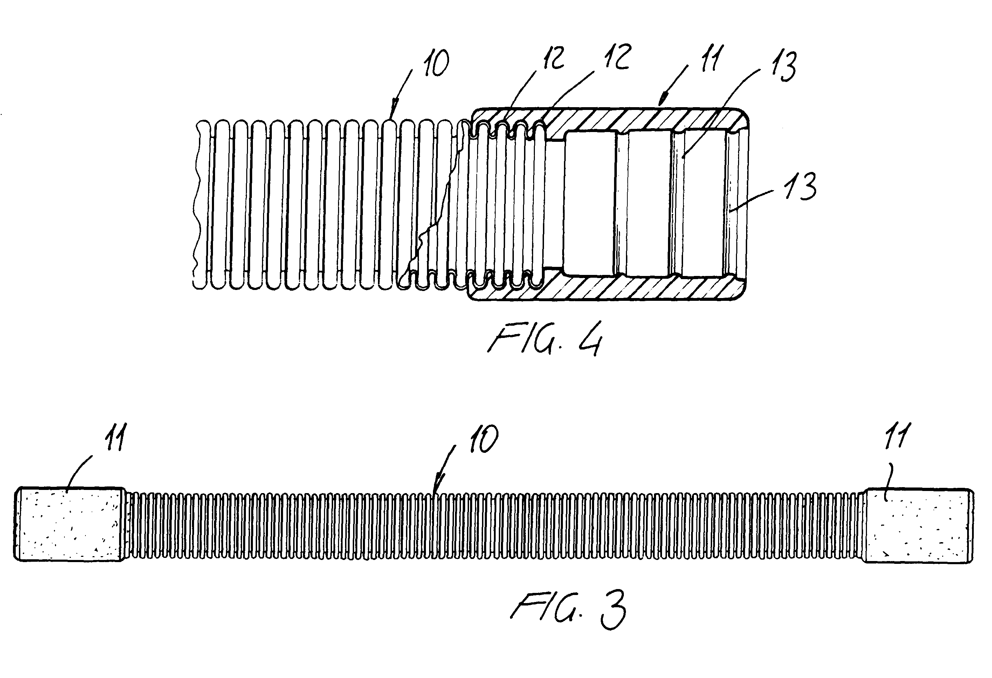

Figure 3 illustrates a plastics material protective sheath element; and
Figure 4 is a cross-sectional view, on an enlarged scale, illustrating a detail of the flexible and extensible sleeve element.

### DESCRIPTION OF THE PREFERRED EMBODIMENT

With reference to the number references of the above mentioned figures, the flexible and extensible tubular element construction, specifically designed for coupling gas appliances to a gas delivery system, which construction has been generally indicated by the reference number 1, comprises a bellows-like metal tubular element 2, which is preferably made of stainless steel and has a bellows-like construction, so as to be easily bent and elongated.

At the end portions thereof, the bellows-like metal tubular element is coupled to fitting endpieces, generally indicated by the reference number 5, which are advantageously constituted by a barrel or bush element 6, rigidly associated with the end-portion of the tubular element 2 and engaging with a rotatable nut, generally indicated by the reference number 7.

The main feature of the present invention is that a protective sheath 10 is moreover provided, said protective sheath having a bellows-like shape too and being made of a plastics material, for example that plastics material commercially known with the trade name of "Moplen".

The sheath 10, at the end portions thereof, is coupled to flexible sleeve elements 11 which, at an end thereof, are provided with recesses 12 for engaging the sheath 10 and, at another end thereof, being provided with a plurality of circumferential ribs 13.

Between the sleeve 11 and th tubular element, an insert 20 can be arranged, said insert being provided with slots 21 engaging with the mentioned ribs 13 so as to firmly lock the sleeve with respect to the fitting end-piece 5.

As shown, the insert 20 is provided with a groove 25, in which a sealing O-ring is engaged, for properly sealing the fitting end-piece.

In the disclosed arrangement, an outer plastics material sheath is provided, which fully covers the flexible tubular metal element, thereby preventing the latter from being damaged by atmospheric agents or other damaging outer agents, thereby overcoming any corrosion problems.

From the above disclosure, it should be apparent that the invention fully achieves the intended aim and objects.

In particular, a protective sheath has been provided, which can be easily applied even on already existing tubular elements.

In practicing the invention, the used materials, provided that they are compatible to the intended use, as well as the contingent size and shapes, can be any, depending on requirements.

## Claims

1. A flexible and extensible tubular element construction, specifically designed for coupling gas appliances to a gas delivery system, which comprises a bellows-like metal tubular element, coupled to a fitting end-piece, characterized in that said flexible and extensible tubular element construction comprises moreover a plastics material protective sheath arranged outside of said metal tubular element and connected to flexible sleeve elements, in turn connectable to said fitting end-piece.

2. A tubular element construction according to Claim 1, characterized in that said tubular element construction comprises moreover insert means which can be coupled between said flexible sleeve and fitting end-piece, for clamping said sheath on said bellows-like metal tubular element.

3. A tubular element construction according to Claims 1 and 2, characterized in that said sleeves are provided, at an end portion thereof, with inner recesses for engaging said protective sheath and, at another end portion thereof, with circumferential ribs which can be engaged in corresponding circumferential slots formed on said insert means.

4. A tubular element construction according to one or more of the preceding claims, characterized in that said insert means are provided with a groove for engaging therein a sealing O-ring, for sealing said fitting end-piece.

5. A tubular element construction according to one or more of the preceding claims, characterized in that said plastics material protective sheath has a bellows-like construction.

6. A tubular element construction according to one or more of the preceding claims, characterized in that said protective sheath is made of "Moplen".

7. A tubular element construction, characterized in that said tubular element is flexible and extensible.

8. A tubular element construction, specifically designed for coupling gas appliances to a gas delivery system, and substantially as broadly disclosed and illustrated for the intended aim and objects.
